# EUROPEAN PATENT SPECIFICATION

(11) **EP 4 156 491 B1**
(45) Date of publication and mention of the grant of the patent: **06.08.2025**
(21) Application number: 20940622.2
(22) Date of filing: 19.06.2020
(51) Int. Cl.: H02M 7/48, H02P 27/14, H02M 7/487, H02P 29/68

(54) **MOTOR CONTROLLER, CONTROL METHOD, AND POWER ASSEMBLY**
MOTORSTEUERUNG, STEUERUNGSVERFAHREN UND LEISTUNGSANORDNUNG
DISPOSITIF DE COMMANDE DE MOTEUR, PROCÉDÉ DE COMMANDE ET ENSEMBLE D'ALIMENTATION

(43) Date of publication of application: 29.03.2023
(73) Proprietor: Huawei Digital Power Technologies Co., Ltd., Shenzhen, Guangdong 518043 (CN)
(72) Inventor: TANG, Jie, Shenzhen, Guangdong 518129 (CN); REN, Xiaobin, Shenzhen, Guangdong 518129 (CN); LU, Chunhong, Shenzhen, Guangdong 518129 (CN)
(74) Representative: Körber, Martin Hans
(86) International application number: PCT/CN2020/097137
(87) International publication number: WO 2021/253413

(56) References cited:
- WO-A1-2017/083527
- CN-A- 103 944 148
- CN-A- 103 944 433
- CN-A- 105 450 064
- CN-A- 108 859 705
- CN-A- 109 302 119
- CN-B- 109 039 125
- US-A1- 2019 273 438

## Description

### TECHNICAL FIELD

This application relates to the field of inverter circuits, and in particular, to a motor control unit (MCU), a control method, and a power assembly

### BACKGROUND

In an electric vehicle, a battery transmits a current to a motor through an inverter circuit. The inverter circuit is usually a three-phase full-bridge inverter circuit. The three-phase full-bridge inverter circuit includes a three-phase full-bridge two-level inverter circuit and a three-phase full-bridge three-level inverter circuit. Two-level means that there are two level states for an output phase voltage, and three-level means that there are three level states for the output phase voltage.

There is a relatively high harmonic for a voltage and a current output by the three-phase full-bridge two-level inverter circuit, and consequently there is an increase in a loss of the motor. In addition, in a low-torque region, there is small power, a switching loss accounts for a large proportion, system efficiency of the inverter circuit is low, and there is a reduction in endurance mileage when the three-phase full-bridge two-level inverter circuit is applied to the electric vehicle. In comparison with the three-phase full-bridge two-level inverter circuit, a quantity of switching transistors in the three-phase full-bridge three-level inverter circuit is doubled, and all the switching transistors have a same current capacity. All the switching transistors are prone to be damaged if all the switching transistors continuously work. Consequently, there is an increase in costs.

CN 109 302 119 A discloses a control method and system of full-period common mode voltage operation and a controller. The method is suitable for a T-type three-level inverter motor drive system. The method comprises the steps of: when a T-type three-level inverter motor drive system is operated in non-dead zone time, employing a mode with a low common mode voltage to predict a control policy to achieve operation of the low voltage, when the T-type three-level inverter motor drive system is operated in a dead zone and the switch stat switching is generated between two bridge arms or among the three bridge arm, disconnecting all three-phase switch tubes to ensure that the bridge arms only output large vectors to achieve operation of the low common mode voltage, wherein the large vectors are PNN, PPN, NPN, NPP, NNP and PNP, and the common mode voltage amplitude is a 1/6 input voltage value.

### SUMMARY

Embodiments of this application provide an MCU, a control method, and a power assembly, to reduce costs of an inverter circuit and improve system efficiency of the inverter circuit.

To achieve the foregoing objectives, the following technical solutions are used in embodiments of this application.

According to a first aspect, a motor control unit is provided, and includes a three-phase full-bridge three-level inverter circuit and a control apparatus. The three-phase full-bridge three-level inverter circuit includes a vertical bridge circuit and a horizontal bridge circuit. A current capacity of a switching transistor in the vertical bridge circuit is greater than or equal to a maximum current of a motor. A current capacity of a switching transistor in the horizontal bridge circuit is less than the current capacity of the switching transistor in the vertical bridge circuit. The control apparatus is configured to control the switching transistor in the horizontal bridge circuit based on torque of the motor, a current output by an output terminal of the vertical bridge circuit, a temperature of the switching transistor in the horizontal bridge circuit, and a terminal voltage of the switching transistor in the horizontal bridge circuit.

According to the motor control unit provided in this embodiment of this application, on the basis of the T-type three-phase full-bridge three-level inverter circuit, the switching transistor in the horizontal bridge circuit is controlled based on the torque of the motor, the current output by the output terminal, the temperature of the switching transistor in the horizontal bridge circuit, and the terminal voltage of the switching transistor in the horizontal bridge circuit. The switching transistor in the horizontal bridge circuit is enabled in a low-torque region, so that the MCU works in a three-level working mode, to improve system efficiency of the inverter circuit. The switching transistor in the horizontal bridge circuit is disabled in a high-torque region, to avoid a case in which all switching transistors in the three-phase full-bridge inverter circuit continuously work. In addition, the current capacity of the switching transistor in the horizontal bridge circuit is less than the current capacity of the switching transistor in the vertical bridge circuit, in other words, a specification of the switching transistor in the horizontal bridge circuit can be reduced, to reduce costs of the inverter circuit.

In a possible implementation, the control apparatus is specifically configured to: disable the switching transistor in the horizontal bridge circuit if the torque of the motor is greater than a first torque threshold or the current output by the output terminal is greater than a first overcurrent threshold, the temperature of the switching transistor in the horizontal bridge circuit is greater than a first temperature threshold, or the terminal voltage of the switching transistor in the horizontal bridge circuit is greater than a first voltage threshold; or enable the switching transistor in the horizontal bridge circuit if the torque of the motor is not greater than a first torque threshold or the current output by the output terminal is not greater than a first overcurrent threshold, the temperature of the switching transistor in the horizontal bridge circuit is not greater than a first temperature threshold, and the terminal voltage of the switching transistor in the horizontal bridge circuit is not greater than a first voltage threshold. In this implementation, the switching transistor in the horizontal bridge circuit can be protected, to avoid overcurrent, overheating, or overvoltage for the switching transistor in the horizontal bridge circuit.

In a possible implementation, the control apparatus is further configured to control the switching transistor in the vertical bridge circuit based on the torque of the motor, the current output by the output terminal, a rotational speed of the motor, a temperature of the switching transistor in the vertical bridge circuit, and a terminal voltage of the switching transistor in the vertical bridge circuit.

In a possible implementation, the control apparatus is specifically configured to: when the torque of the motor is greater than a second torque threshold or the current output by the output terminal is greater than a second overcurrent threshold, if the rotational speed of the motor is less than or equal to a rotational speed threshold, the temperature of the switching transistor in the vertical bridge circuit is greater than a second temperature threshold, or the terminal voltage of the switching transistor in the vertical bridge circuit is greater than a second voltage threshold, disable the switching transistor in the vertical bridge circuit; or if the rotational speed of the motor is greater than a rotational speed threshold, the temperature of the switching transistor in the vertical bridge circuit is not greater than a second temperature threshold, and the terminal voltage of the switching transistor in the vertical bridge circuit is not greater than a second voltage threshold, conduct an upper-half-bridge switching transistor or a lower-half-bridge switching transistor in the vertical bridge circuit; or enable the switching transistor in the vertical bridge circuit when the torque of the motor is less than or equal to a second torque threshold or the current output by the output terminal is less than or equal to a second overcurrent threshold. In this implementation, the switching transistor in the vertical bridge circuit can be protected, to avoid overcurrent, overheating, or overvoltage for the switching transistor in the vertical bridge circuit.

In a possible implementation, the control apparatus is further configured to adjust a duty cycle of a pulse width modulation control signal after enabling or disabling the switching transistor in the horizontal bridge circuit, so that a voltage output by the output terminal remains unchanged. A three-phase full-bridge two-level inverter circuit and the three-phase full-bridge three-level inverter circuit output different voltages. Therefore, to prevent voltage pulsation from impacting the motor, the duty cycle of the PWM control signal is adjusted, so that the voltage output by the output terminal of the vertical bridge circuit remains unchanged.

According to a second aspect, a control method for a motor control unit is provided, and is applied to the motor control unit in any one of the first aspect and the implementations of the first aspect. The control method includes: controlling a switching transistor in a horizontal bridge circuit based on torque of a motor, a current output by an output terminal of a vertical bridge circuit in a three-phase full-bridge three-level inverter circuit, a temperature of the switching transistor in the horizontal bridge circuit in the three-phase full-bridge three-level inverter circuit, and a terminal voltage of the switching transistor in the horizontal bridge circuit.

In a possible implementation, the controlling a switching transistor in a horizontal bridge circuit based on torque of a motor, a current output by an output terminal of a vertical bridge circuit in a three-phase full-bridge three-level inverter circuit, a temperature of the switching transistor in the horizontal bridge circuit in the three-phase full-bridge three-level inverter circuit, and a terminal voltage of the switching transistor in the horizontal bridge circuit includes: disabling the switching transistor in the horizontal bridge circuit if the torque of the motor is greater than a first torque threshold or the current output by the output terminal is greater than a first overcurrent threshold, the temperature of the switching transistor in the horizontal bridge circuit is greater than a first temperature threshold, or the terminal voltage of the switching transistor in the horizontal bridge circuit is greater than a first voltage threshold; or enabling the switching transistor in the horizontal bridge circuit if the torque of the motor is not greater than a first torque threshold or the current output by the output terminal is not greater than a first overcurrent threshold, the temperature of the switching transistor in the horizontal bridge circuit is not greater than a first temperature threshold, and the terminal voltage of the switching transistor in the horizontal bridge circuit is not greater than a first voltage threshold.

In a possible implementation, the method further includes: controlling a switching transistor in the vertical bridge circuit based on the torque of the motor, the current output by the output terminal, a rotational speed of the motor, a temperature of the switching transistor in the vertical bridge circuit, and a terminal voltage of the switching transistor in the vertical bridge circuit.

In a possible implementation, the controlling a switching transistor in the vertical bridge circuit based on the torque of the motor, the current output by the output terminal, a rotational speed of the motor, a temperature of the switching transistor in the vertical bridge circuit, and a terminal voltage of the switching transistor in the vertical bridge circuit includes: when the torque of the motor is greater than a second torque threshold or the current output by the output terminal is greater than a second overcurrent threshold, if the rotational speed of the motor is less than or equal to a rotational speed threshold, the temperature of the switching transistor in the vertical bridge circuit is greater than a second temperature threshold, or the terminal voltage of the switching transistor in the vertical bridge circuit is greater than a second voltage threshold, disabling the switching transistor in the vertical bridge circuit; or if the rotational speed of the motor is greater than a rotational speed threshold, the temperature of the switching transistor in the vertical bridge circuit is not greater than a second temperature threshold, and the terminal voltage of the switching transistor in the vertical bridge circuit is not greater than a second voltage threshold, conducting an upper-half-bridge switching transistor or a lower-half-bridge switching transistor in the vertical bridge circuit; or enabling the switching transistor in the vertical bridge circuit when the torque of the motor is less than or equal to a second torque threshold or the current output by the output terminal is less than or equal to a second overcurrent threshold.

In a possible implementation, the method further includes: adjusting a duty cycle of a pulse width modulation control signal after the switching transistor in the horizontal bridge circuit is enabled or disabled, so that a voltage output by the output terminal remains unchanged.

According to a third aspect, a power assembly is provided, and includes the motor control unit in any one of the first aspect and the implementations of the first aspect, a direct current power supply, and a motor. The motor control unit is configured to: convert a direct current output by the direct current power supply into an alternating current, supply power to the motor, and control a rotational speed of the motor.

According to a fourth aspect, a computer-readable storage medium is provided. The computer-readable storage medium stores a computer program. When the computer program is run on a computer, the method in any one of the second aspect and the implementations of the second aspect is performed.

According to a fifth aspect, a computer program product including instructions is provided. When the instructions are run on a computer or a processor, the method in any one of the second aspect and the implementations is performed.

For technical effects of the second aspect to the fifth aspect, refer to the content of the first aspect. Details are not repeated herein.

### BRIEF DESCRIPTION OF DRAWINGS

FIG. 1 is a schematic diagram of structures of a power assembly and an MCU according to an embodiment of this application;
FIG. 2 is a schematic diagram of structures of another power assembly and another MCU according to an embodiment of this application;
FIG. 3 is a schematic diagram of structures of still another power assembly and still another MCU according to an embodiment of this application;
FIG. 4 is a schematic diagram of a spatial location of each voltage vector in a three-phase full-bridge two-level inverter circuit according to an embodiment of this application;
FIG. 5 is a schematic diagram of a seven-segment PWM waveform according to an embodiment of this application;
FIG. 6 is a schematic diagram of system efficiency that exists after a three-phase full-bridge two-level inverter circuit and a motor are combined according to an embodiment of this application;
FIG. 7 is a schematic diagram of structures of yet another power assembly and yet another MCU according to an embodiment of this application;
FIG. 8 is a schematic flowchart of a control method according to an embodiment of this application;
FIG. 9 is a schematic flowchart of another control method according to an embodiment of this application;
FIG. 10 is a schematic flowchart of still another control method according to an embodiment of this application;
FIG. 11 is a schematic diagram of a conduction state of a switching transistor in a two-level working mode according to an embodiment of this application;
FIG. 12 is a schematic diagram of a spatial location of each voltage vector in a three-phase full-bridge three-level inverter circuit according to an embodiment of this application;
FIG. 13 is a schematic diagram of a conduction state of a switching transistor in a three-level working mode according to an embodiment of this application; and
FIG. 14 is a schematic diagram of a conduction state of a switching transistor that exists when switching from a two-level working mode to a three-level working mode is performed according to an embodiment of this application.

### DESCRIPTION OF EMBODIMENTS

Some concepts in this application are first described.

Volt-second balance principle: The volt-second balance principle is initially proposed for an inductor. A volt-second value is a volt-second product. When a switching circuit works steadily, integral of a current change of the inductor in a switching period is 0, that is, a current increment and a current decrement that pass through the inductor are equal. When being applied to pulse width modulation (pulse width modulation, PWM), the volt-second balance principle is reflected in the following formula: *V_{ON} * T_{ON}* = *V_{OFF} * T_{OFF}*, where *V_{ON}* represents a voltage that is at either end of the inductor and that exists when the inductor is turned on, *V_{OFF}* represents a voltage that is at the either end of the inductor and that exists when the inductor is turned off, *T_{ON}* represents a time in which the inductor is turned on, and *T_{OFF}* represents a time in which the inductor is turned off.

A method for measuring torque of a motor includes but is not limited to a balanced-force method, a transfer method, or an energy conversion method.

Balanced-force method: For a mechanical transmission component in a steady working state, there is torque T on a motor spindle, and there is torque T' on a motor body. The torque T and the torque T' are equal in magnitude and opposite in direction. The torque T on the motor spindle may be obtained by measuring the torque T' on the motor body. If F is force acting on an arm of force, and L is a length of the arm of force, T'=LF. T' may be obtained by measuring the force F exerted by the motor body on a measurement point and the arm L of force between the motor body and the measurement point, and then the torque T is obtained.

Transfer method: When the motor transfers the torque to an elastic element, a physical parameter of the elastic element changes to some extent, and the torque output by the motor may be measured by using a correspondence between the change and the torque. Based on different physical parameters, the transfer method further includes a magnetoelastic method, a strain method, a vibrating wire method, a photoelectric method, or the like. Currently, the transfer method is most widely applied to the field of torque measurement.

Energy conversion method: Based on the law of energy conservation, the torque of the motor is indirectly measured by measuring another parameter such as thermal energy or electric energy.

Methods for measuring an alternating current include but are not limited to an electromagnetic measurement method, an electric measurement method, and a rectification measurement method.

Electromagnetic measurement method: An alternating current is measured by detecting a change of magnetic flux of a measured object.

Electric measurement method: For example, a fixed current may be connected by using a fixed coil, and a to-be-measured current may be connected by using a movable coil. The two coils are mutually exclusive to generate torque, and the alternating current is measured based on a correspondence between torque and a current.

Rectification measurement method: A to-be-measured alternating current is converted into a direct current through rectification, and the alternating current is obtained based on a current conversion relationship between a direct current and an alternating current. However, this method is limited to measurement of a sinusoidal alternating current.

In embodiments of this application, an alternating current output by an output terminal of an MCU is positively correlated with torque of a motor. A higher current output by the output terminal of the MCU indicates higher torque of the motor, and a lower current output by the output terminal of the MCU indicates lower torque of the motor.

Methods for measuring a temperature and a terminal voltage of a switching transistor are as follows: The temperature of the switching transistor may be measured by installing a temperature sensor in the switching transistor. The terminal voltage of the switching transistor may be determined by measuring a bus voltage coupled to two ends of the switching transistor connected in series.

PWM in this application may include space vector pulse width modulation (SVPWM), differential pulse width modulation (DPWM), sinusoidal pulse width modulation (SPWM), or the like.

A direct current power supply in this application may be a power supply apparatus such as a solar cell, a lithium battery, a lead-acid battery, a large capacitor, a fuel cell, or a solid-state battery.

A motor in this application may be an alternating current motor such as a permanent magnet synchronous motor or an induction motor.

A switching transistor in this application may be an insulated gate bipolar transistor (IGBT), a metal oxide semiconductor (MOS) transistor, or the like.

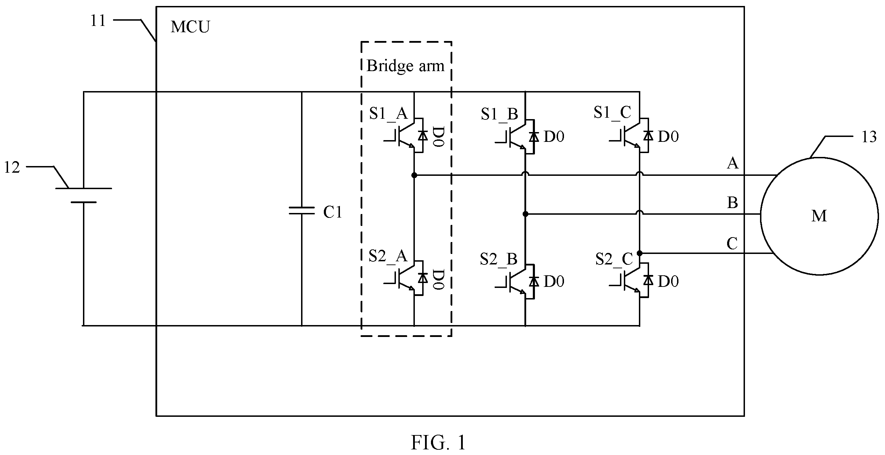

As shown in FIG. 1, FIG. 2, and FIG. 3, an embodiment of this application provides a power assembly. The power assembly may be applied to an electric vehicle, an electric ship, or another field.

The power assembly includes an MCU 11, a direct current power supply 12, and a motor 13. Two output terminals of the direct current power supply 12 are connected to two input terminals of the MCU 11, and a three-phase output terminal of the MCU 11 is connected to a three-phase input terminal of the motor 13.

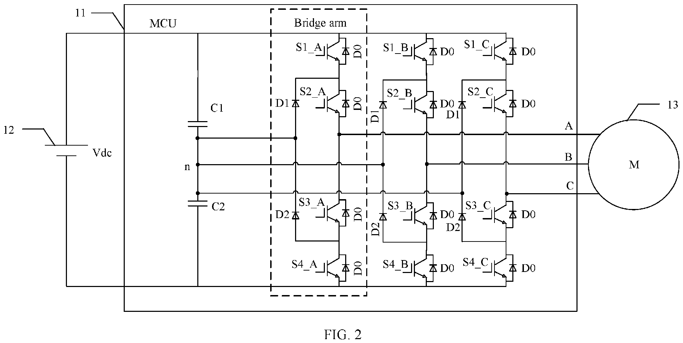

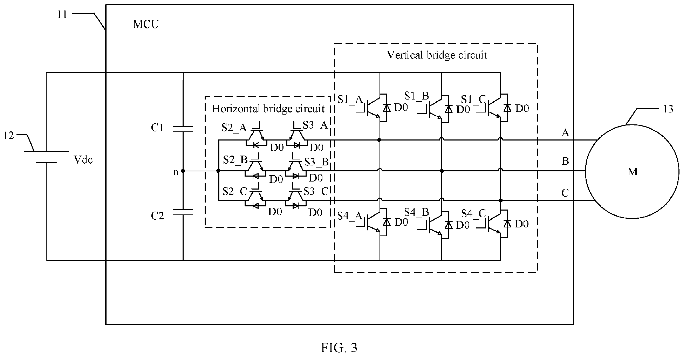

For example, the MCU 11 may include a three-phase full-bridge two-level inverter circuit shown in FIG. 1, a neural point clamped I-type three-phase full-bridge three-level inverter circuit shown in FIG. 2, or a T-type three-phase full-bridge three-level inverter circuit shown in FIG. 3.

A core device in the inverter circuit is a switching transistor. The MCU 11 controls, through PWM, the switching transistor to be conducted and cut off, converts a direct current output by the direct current power supply 12 into an alternating current, supplies power to the motor 13, and controls a voltage and a current of an output alternating current by adjusting a duty cycle of a PWM control signal, to control a rotational speed of the motor 13.

The three-phase full-bridge two-level inverter circuit shown in FIG. 1 includes a capacitor C1 and three bridge arms. Two ends of the capacitor C1 are respectively coupled to a positive electrode and a negative electrode of a bus, and the two ends of the capacitor C1 are further respectively coupled to two ends of each of the three bridge arms. Each bridge arm includes two switching transistors connected in series, namely, a first switching transistor and a second switching transistor, and further includes two diodes D0 respectively anti-parallel connected to the switching transistors. For example, a first switching transistor S1_A and a second switching transistor S2_A in a first bridge arm are connected in series, a first switching transistor S1_B and a second switching transistor S2_B in a second bridge arm are connected in series, and a first switching transistor S1_C and a second switching transistor S2_C in a third bridge arm are connected in series.

A connection point of the first switching transistor and the second switching transistor in each bridge arm is an output terminal corresponding to the bridge arm. For example, an output terminal of the first bridge arm is A, an output terminal of the second bridge arm is B, and an output terminal of the third bridge arm is C. That is, the first bridge arm outputs a phase-A voltage, the second bridge arm outputs a phase-B voltage, and the third bridge arm outputs a phase-C voltage. The three output terminals are configured to be coupled to the motor 13.

At a same moment, in each bridge arm, there is always a case in which one switching transistor is conducted and the other switching transistor is cut off. If a case in which an upper switching transistor in a bridge arm is conducted and a lower switching transistor is cut off is defined as a state 1, and a case in which the upper switching transistor is cut off and the lower switching transistor is conducted is defined as a state 0, the switching transistors in the three bridge arms form eight different voltage vectors. The eight different voltage vectors include six effective voltage vectors (V1(001), V2(010), V3(011), V4(100), V5(101), and V6(110)) and two zero vectors (V0(000) and V7(111)).

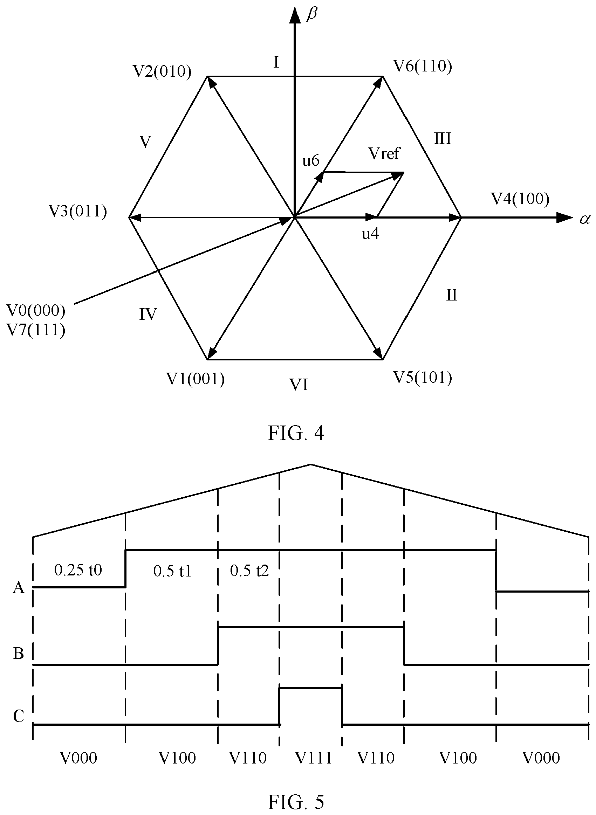

FIG. 4 shows a spatial location of each voltage vector in the three-phase full-bridge two-level inverter circuit. For example, when a reference voltage vector Vref is located in a sector III, the reference voltage vector Vref includes two adjacent effective voltage vectors V4(100) and V6(110) and a zero vector V0(000)/V7(111). A reference voltage vector located in another sector is calculated in a similar manner.

An action time of each of the two effective voltage vectors adjacent to the reference voltage vector and the zero vector may be calculated based on a volt-second balance principle, and a seven-segment PWM waveform shown in FIG. 5 may be obtained. The reference voltage vector is a voltage vector acting on a specific sector at a specific moment. Based on a principle of mean equivalence, the reference voltage vector may be equivalent to the two non-zero basic vectors adjacent to the reference voltage vector and the zero vector.

In FIG. 5, t0 represents an action time of the zero vector, t1 represents an action time of one effective voltage vector adjacent to the reference voltage vector, t2 represents an action time of the other effective voltage vector adjacent to the reference voltage vector, and A/B/C represents a three-phase output, which corresponds to A/B/C in FIG. 1. It may be learned that there are only two levels, namely, a high level and a low level, for an output voltage of each phase.

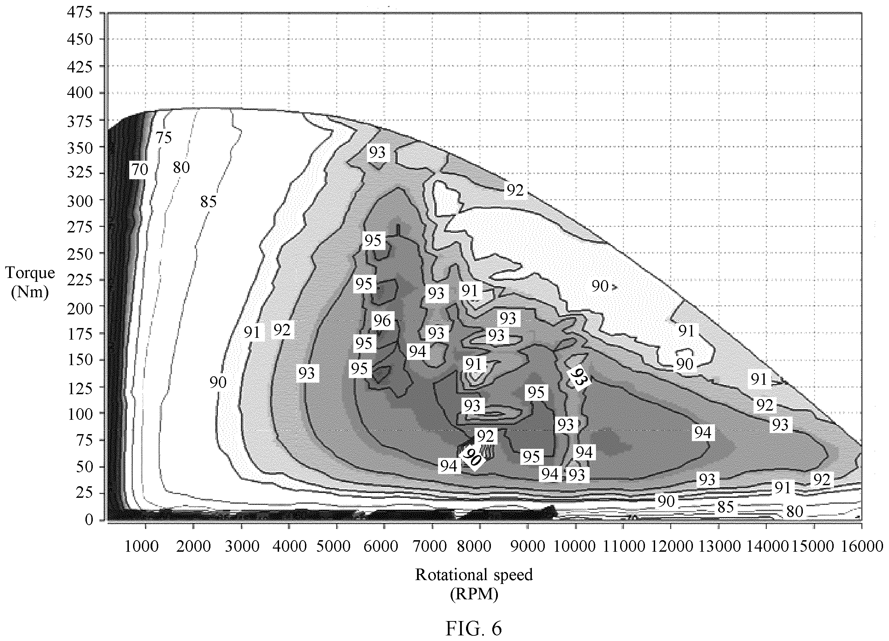

FIG. 6 is a schematic diagram of system efficiency that exists after the three-phase full-bridge two-level inverter circuit and the motor are combined. A gradient value in the figure represents the system efficiency. It may be learned that there is relatively low system efficiency in a low-torque region. For example, when torque is less than 25 Nm, the system efficiency is less than 90%; and when the torque is 5 Nm, the system efficiency is less than 80%.

Table 1 shows steady-state working point data of an electric vehicle published by the new European driving cycle (NEDC). It may be learned from data in a column of "torque of the motor (Nm)" that steady-state working points of the electric vehicle are concentrated in a low-torque region. Therefore, there is very low system efficiency when the three-phase full-bridge two-level inverter circuit is used in an MCU of the electric vehicle.

**Table 1**

| Vehicle speed (km/h) | Rotational speed of a motor (rpm) | Power (KW) | Torque of the motor (Nm) |
|---|---|---|---|
| 30 | 2200 | 4 | 17 |
| 50 | 3700 | 5 | 12 |
| 70 | 5200 | 10 | 18 |
| 90 | 6700 | 15 | 21 |
| 100 | 7400 | 20 | 25 |
| 110 | 8100 | 24 | 28 |
| 130 | 9600 | 33 | 32 |

In conclusion, there are only two levels for a voltage output by the three-phase full-bridge two-level inverter circuit, and there is a relatively high harmonic for the output voltage and an output current. Consequently, there is a larger torque ripple of the motor, stronger noise, and an increase in a loss. In addition, in the low-torque region, there is small power, a switching loss accounts for a large proportion, there is low system efficiency, and there is a reduction in endurance mileage when this topology is used in the MCU of the electric vehicle.

In comparison with the three-phase full-bridge two-level inverter circuit shown in FIG. 1, a voltage output by the three-phase full-bridge three-level inverter circuit shown in FIG. 2 or FIG. 3 includes three levels, a waveform of the output voltage is more similar to an ideal sinusoidal waveform, and there is a lower harmonic for both the output voltage and an output current. Therefore, system efficiency of the inverter circuit can be improved. In addition, at a same voltage level, a switching transistor in the three-phase full-bridge three-level inverter circuit has low voltage resistance, and can reduce electromagnetic interference. Therefore, the three-phase full-bridge three-level inverter circuit is relatively widely applied to high-voltage and high-power scenarios.

The three-phase full-bridge three-level inverter circuit in FIG. 2 includes two voltage divider capacitors (a first capacitor C1 and a second capacitor C2) connected in series, a neutral point n, and three bridge arms.

Two ends of the first capacitor C1 are respectively coupled to a positive electrode of a bus and the neutral point n, and two ends of the second capacitor C2 are respectively coupled to a negative electrode of the bus and the neutral point n. A terminal voltage of each voltage divider capacitor is half of a voltage Vdc, namely, Vdc/2, of the direct current power supply.

Each bridge arm includes four switching transistors connected in series. For example, a first switching transistor S1_A, a second switching transistor S2_A, a third switching transistor S3_A, and a fourth switching transistor S4_A in a first bridge arm are connected in series, a first switching transistor S1_B, a second switching transistor S2_B, a third switching transistor S3_B, and a fourth switching transistor S4_B in a second bridge arm are connected in series, and a first switching transistor S1_C, a second switching transistor S2_C, a third switching transistor S3_C, and a fourth switching transistor S4_C in a third bridge arm are connected in series.

A connection point of the second switching transistor and the third switching transistor in each bridge arm is an output terminal corresponding to the bridge arm. For example, an output terminal of the first bridge arm is A, an output terminal of the second bridge arm is B, and an output terminal of the third bridge arm is C. That is, the first bridge arm outputs a phase-A voltage, the second bridge arm outputs a phase-B voltage, and the third bridge arm outputs a phase-C voltage. The three output terminals are configured to be coupled to the motor 13.

In each bridge arm, the first switching transistor and the third switching transistor are complementarily conducted, and the second switching transistor and the fourth switching transistor are complementarily conducted. For example, when the first switching transistor is conducted, the third switching transistor is cut off, or when the third switching transistor is conducted, the first switching transistor is cut off; and when the second switching transistor is conducted, the fourth switching transistor is cut off, or when the fourth switching transistor is conducted, the second switching transistor is cut off.

Each bridge arm further includes four diodes D0 respectively anti-parallel connected to the switching transistors. The diode D0 is also referred to as a freewheel diode, and serves as a freewheel path of a load current, to prevent the switching transistor from being damaged.

Each bridge arm further includes a diode D1 and a diode D2. The diode D1 couples the neutral point n to a connection point of the first switching transistor and the second switching transistor in each of the three bridge arms. The diode D2 couples the neutral point n to a connection point of the third switching transistor and the fourth switching transistor in each of the three bridge arms. The diode D1 and the diode D2 are referred to as clamp diodes.

A working mode of the I-type three-phase full-bridge three-level inverter circuit is described by using the first bridge arm as an example. It is assumed that a voltage of the neutral point n is a reference zero potential, and a direction in which a current flows from the output terminal A of the first vertical bridge arm to the motor is a positive direction.
(1) When the first switching transistor S1_A and the second switching transistor S2_A are conducted, and the third switching transistor S3_A and the fourth switching transistor S4_A are cut off, regardless of whether there is a positive or negative current direction, a voltage output by the output terminal A is half of the voltage Vdc, namely, Vdc/2, of the direct current power supply.
(2) When the second switching transistor S2_A and the third switching transistor S3_A are conducted, and the first switching transistor S1_A and the fourth switching transistor S4_A are cut off, two clamp diodes D1 and D2 in the bridge arm clamp the output terminal A to the neutral point n, and regardless of whether there is a positive or negative current direction, the voltage output by the output terminal A is 0.
(3) When the third switching transistor S3_A and the fourth switching transistor S4_A are conducted, and the first switching transistor S1_A and the second switching transistor S2_A are cut off, regardless of whether there is a positive or negative current direction, the voltage output by the output terminal A is -Vdc/2.

The T-type three-phase full-bridge three-level inverter circuit in FIG. 3 includes a first capacitor C1, a second capacitor C2, a vertical bridge circuit including three vertical bridge arms, a horizontal bridge circuit including three horizontal bridge arms, and a neutral point n.

Two ends of the first capacitor C1 are respectively coupled to a positive electrode of a bus and the neutral point n, and two ends of the second capacitor C2 are respectively coupled to a negative electrode of the bus and the neutral point n. Two ends of the vertical bridge arm are respectively coupled to the positive electrode and the negative electrode of the bus.

Each vertical bridge arm includes two switching transistors connected in series. For example, a first switching transistor S1_A and a fourth switching transistor S4_A in a first vertical bridge arm are connected in series, a first switching transistor S1_B and a fourth switching transistor S4_B in a second vertical bridge arm are connected in series, and a first switching transistor S1_C and a fourth switching transistor S4_C in a third vertical bridge arm are connected in series.

Each horizontal bridge arm includes two switching transistors that are anti-series connected. For example, a second switching transistor S2_A and a third switching transistor S3_A in a first horizontal bridge arm are connected in series, a second switching transistor S2_B and a third switching transistor S3_B in a second horizontal bridge arm are connected in series, and a second switching transistor S2_C and a third switching transistor S3_C in a third horizontal bridge arm are connected in series.

A connection point of the two switching transistors (the first switching transistor S1 and the fourth switching transistor S4) in each vertical bridge arm is an output terminal corresponding to the bridge arm. For example, an output terminal of the first vertical bridge arm is A, an output terminal of the second vertical bridge arm is B, and an output terminal of the third vertical bridge arm is C. That is, the first bridge arm outputs a phase-A voltage, the second bridge arm outputs a phase-B voltage, and the third bridge arm outputs a phase-C voltage. The three output terminals are configured to be coupled to the motor 13.

Two ends of a horizontal bridge arm are respectively coupled to an output terminal of a vertical bridge arm and the neutral point n. For example, two ends of the first horizontal bridge arm are respectively coupled to the output terminal A of the first vertical bridge arm and the neutral point n, two ends of the second horizontal bridge arm are respectively coupled to the output terminal B of the second vertical bridge arm and the neutral point n, and two ends of the third horizontal bridge arm are respectively coupled to the output terminal C of the third vertical bridge arm and the neutral point n.

Each vertical bridge arm or horizontal bridge arm further includes two diodes D0 respectively anti-parallel connected to the switching transistors.

It should be noted that the switching transistor in the horizontal bridge circuit and the switching transistor in the vertical bridge circuit in the T-type three-phase full-bridge three-level inverter circuit may be different types of devices. For example, a MOS transistor is used in the horizontal bridge circuit, and an IGBT is used in the vertical bridge circuit; or an IGBT is used in the horizontal bridge circuit, and a MOS transistor is used in the vertical bridge circuit.

In comparison with the I-type three-phase full-bridge three-level inverter circuit in FIG. 2, in the T-type three-phase full-bridge three-level inverter circuit in FIG. 3, a clamp diode is no longer used to clamp the output terminal to the neutral point n, but instead the two switching transistors (for example, the second switching transistor S2_A and the third switching transistor S3_A in the first horizontal bridge arm) that are anti-series connected in the horizontal bridge arm are used to connect the output terminal of the vertical bridge arm (for example, the output terminal A of the first vertical bridge arm) to the neutral point n, to clamp the output terminal of the vertical bridge arm to the neutral point n.

A working mode of the T-type three-phase full-bridge three-level inverter circuit is described by using the first vertical bridge arm and the first horizontal bridge arm as examples. It is assumed that a voltage of the neutral point n is a reference zero potential, and a direction in which a current flows from the output terminal A of the first vertical bridge arm to the motor is a positive direction.
(1) When the first switching transistor S1_A and the second switching transistor S2_A are conducted, and the third switching transistor S3_A and the fourth switching transistor S4_A are cut off, regardless of whether there is a positive or negative current direction, a voltage output by the output terminal A is half of a voltage Vdc, namely, Vdc/2, of the direct current power supply.
(2) When the second switching transistor S2_A and the third switching transistor S3_A are conducted, and the first switching transistor S1_A and the fourth switching transistor S4_A are cut off, the second switching transistor S2_A and the third switching transistor S3_A clamp the output terminal A to the neutral point n, and regardless of whether there is a positive or negative current direction, the voltage output by the output terminal A is 0.
(3) When the third switching transistor S3_A and the fourth switching transistor S4_A are conducted, and the first switching transistor S1_A and the second switching transistor S2_A are cut off, regardless of whether there is a positive or negative current direction, the voltage output by the output terminal A is -Vdc/2.

In conclusion, regardless of in the I-type three-phase full-bridge three-level inverter circuit or the T-type three-phase full-bridge three-level inverter circuit, there are three levels for a voltage output by each output terminal. Therefore, in comparison with the three-phase full-bridge two-level inverter circuit, there is a lower harmonic for a voltage and a current output by the three-phase full-bridge three-level inverter circuit. However, in comparison with the three-phase full-bridge two-level inverter circuit, a quantity of switching transistors in the three-phase full-bridge three-level inverter circuit is doubled, and all the switching transistors have a same current capacity. All the switching transistors are prone to be damaged if all the switching transistors continuously work. Consequently, there is an increase in costs.

Embodiments of this application provide an MCU and a control method. On the basis of a T-type three-phase full-bridge three-level inverter circuit, a switching transistor in a horizontal bridge circuit is controlled based on torque of a motor, a current output by an output terminal, a temperature of the switching transistor in the horizontal bridge circuit, and a terminal voltage of the switching transistor in the horizontal bridge circuit. In a low-torque region, the switching transistor in the horizontal bridge circuit is enabled. In this case, there is still the T-type three-phase full-bridge three-level inverter circuit (which may be briefly referred to as a three-level working mode), to improve system efficiency and increase endurance mileage. Otherwise, the switching transistor in the horizontal bridge circuit is disabled. In this case, there is degradation to a three-phase full-bridge two-level inverter circuit (which may be briefly referred to as a two-level working mode), to prevent the switching transistor in the horizontal bridge circuit from being damaged. In addition, a current capacity of the switching transistor in the horizontal bridge circuit is less than a current capacity of a switching transistor in a vertical bridge circuit, to reduce costs of the inverter circuit. Furthermore, the switching transistor is protected, to ensure that all switching transistors can be protected before, after, and when switching between different working modes is performed.

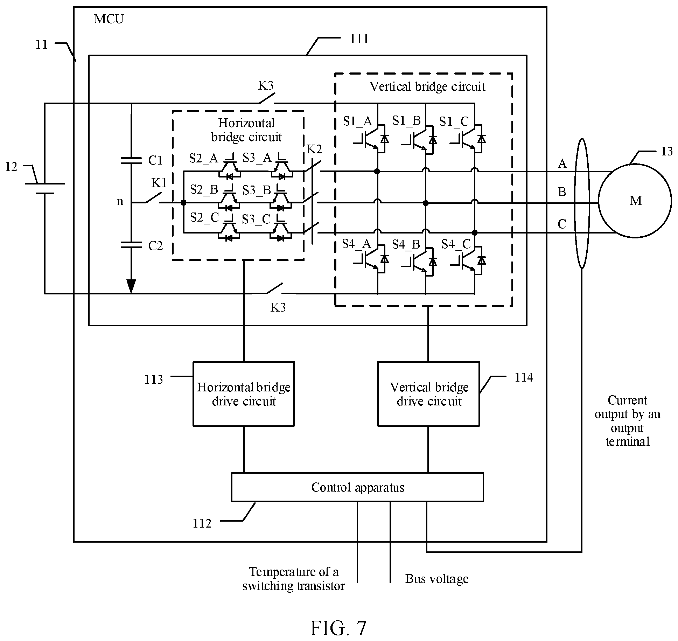

As shown in FIG. 7, an embodiment of this application provides an MCU 11. The MCU 11 obtains torque of a motor or a current output by an output terminal of the MCU 11, converts one of the torque and the current (for example, converts one of the torque and the current by looking up a table) into a Q-axis current Iq and a D-axis current Id of the motor, obtains a corresponding Q-axis voltage Uq and a corresponding D-axis voltage Ud, performs further calculation to obtain a comparison value of a PWM control signal, calculates a duty cycle, controls, based on the duty cycle, a switching transistor to be conducted and cut off, converts a direct current output by a direct current power supply 12 into an alternating current, supplies power to a motor 13, and controls a voltage and a current of an output alternating current, to control a rotational speed of the motor.

The MCU 11 includes a three-phase full-bridge three-level inverter circuit 111, a control apparatus 112, a horizontal bridge drive circuit 113, and a vertical bridge drive circuit 114.

The three-phase full-bridge three-level inverter circuit 111 is the T-type three-phase full-bridge three-level inverter circuit shown in FIG. 3, that is, includes a horizontal bridge circuit and a vertical bridge circuit. For description of a structure of the three-phase full-bridge three-level inverter circuit 111, refer to the foregoing description. Details are not repeated herein.

The control apparatus 112 may send a PWM control signal to a switching transistor in the horizontal bridge circuit by using the horizontal bridge drive circuit 113, to drive the switching transistor in the horizontal bridge circuit to be conducted or cut off. The control apparatus 112 may send a PWM control signal to a switching transistor in the vertical bridge circuit by using the vertical bridge drive circuit 114, to drive the switching transistor in the vertical bridge circuit to be conducted or cut off. The PWM control signal is a periodic high-low level signal.

A current capacity of the switching transistor in the vertical bridge circuit is greater than or equal to a maximum current of the motor 13, and a current capacity of the switching transistor in the horizontal bridge circuit is less than the current capacity of the switching transistor in the vertical bridge circuit. For example, the current capacity of the switching transistor in the horizontal bridge circuit may be 1/6 of the current capacity of the switching transistor in the vertical bridge circuit. Alternatively, a proportion between the current capacity of the switching transistor in the horizontal bridge circuit and the current capacity of the switching transistor in the vertical bridge circuit may be determined with reference to an actual application scenario. A specific manner is not limited in this application.

How to control the switching transistor in the horizontal bridge circuit (or the vertical bridge circuit) is described below.

In a possible implementation, the switching transistor in the horizontal bridge circuit (or the vertical bridge circuit) may be enabled by sending an enable signal to the switching transistor in the horizontal bridge circuit (or the vertical bridge circuit), and the switching transistor in the horizontal bridge circuit (or the vertical bridge circuit) may be disabled by sending a disable signal to the switching transistor in the horizontal bridge circuit (or the vertical bridge circuit).

For example, if the switching transistor is an N-channel MOS transistor, the control apparatus 112 outputs a low level (disable signal) to a gate of the switching transistor in the horizontal bridge circuit by using the horizontal bridge drive circuit 113, to cut off the switching transistor, so as to disable the switching transistor in the horizontal bridge circuit, and the control apparatus 112 outputs a PWM control signal (enable signal) to the gate of the switching transistor in the horizontal bridge circuit by using the horizontal bridge drive circuit 113, to enable the switching transistor in the horizontal bridge circuit.

The control apparatus 112 outputs a low level (disable signal) to a gate of the switching transistor in the vertical bridge circuit by using the vertical bridge drive circuit 114, to cut off the switching transistor, so as to disable the switching transistor in the vertical bridge circuit; and the control apparatus 112 outputs a PWM control signal (enable signal) to the gate of the switching transistor in the vertical bridge circuit by using the vertical bridge drive circuit 114, to enable the switching transistor in the vertical bridge circuit.

In another possible implementation, the switching transistor in the horizontal bridge circuit (or the vertical bridge circuit) may be enabled or disabled by using a physical switch.

Optionally, there may further be a horizontal bridge protection switch K1 between the horizontal bridge circuit and a neutral point, or there may further be a horizontal bridge protection switch K2 between the horizontal bridge circuit and the vertical bridge circuit. When the control apparatus 112 controls the horizontal bridge protection switch K1 or the horizontal bridge protection switch K2 to be closed, the horizontal bridge circuit is connected to the three-phase full-bridge three-level inverter circuit 111. This is equivalent to enabling the switching transistor in the horizontal bridge circuit. When the control apparatus 112 controls the horizontal bridge protection switch K1 or the horizontal bridge protection switch K2 to be open, the horizontal bridge circuit is disconnected from the three-phase full-bridge three-level inverter circuit 111. This is equivalent to disabling the switching transistor in the horizontal bridge circuit.

Optionally, there may further be a vertical bridge protection switch K3 between the vertical bridge circuit and each of a positive electrode and a negative electrode of a bus. When the control apparatus 112 controls the vertical bridge protection switch K3 to be closed, the vertical bridge circuit is connected to the three-phase full-bridge three-level inverter circuit 111. This is equivalent to enabling the switching transistor in the vertical bridge circuit. When the control apparatus 112 controls the vertical bridge protection switch K3 to be open, the vertical bridge circuit is disconnected from the three-phase full-bridge three-level inverter circuit 111. This is equivalent to disabling the switching transistor in the vertical bridge circuit.

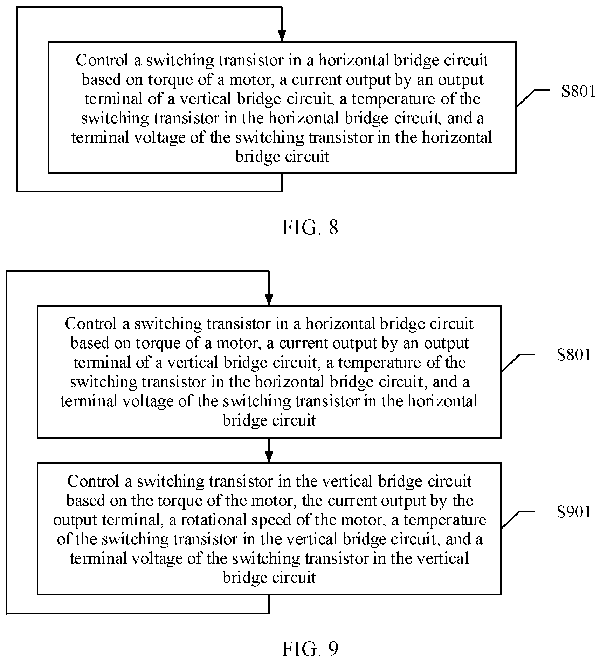

The control apparatus 112 may perform a control method shown in FIG. 8:
S801. Control the switching transistor in the horizontal bridge circuit based on the torque of the motor, a current output by an output terminal of the vertical bridge circuit, a temperature of the switching transistor in the horizontal bridge circuit, and a terminal voltage of the switching transistor in the horizontal bridge circuit.

The torque of the motor and the current output by the output terminal of the vertical bridge circuit are linearly correlated, or may be equivalent to each other. Therefore, either of the torque and the current may be measured.

The torque of the motor may be measured by using the foregoing balanced-force method, transfer method, or energy conversion method, or the like. A current transformer may be installed on a path between the output terminal of the MCU (namely, the output terminal of the vertical bridge circuit) and the motor, and a current output by any output terminal of the vertical bridge circuit is indirectly measured by measuring a current in the current transformer. As described above, an alternating current output by the inverter circuit is not a standard sinusoidal alternating current, and therefore is not suitable for the rectification measurement method, and the foregoing electromagnetic measurement method or electric measurement method may be used.

For methods for measuring the temperature and the terminal voltage of the switching transistor, refer to the foregoing description. Details are not repeated herein.

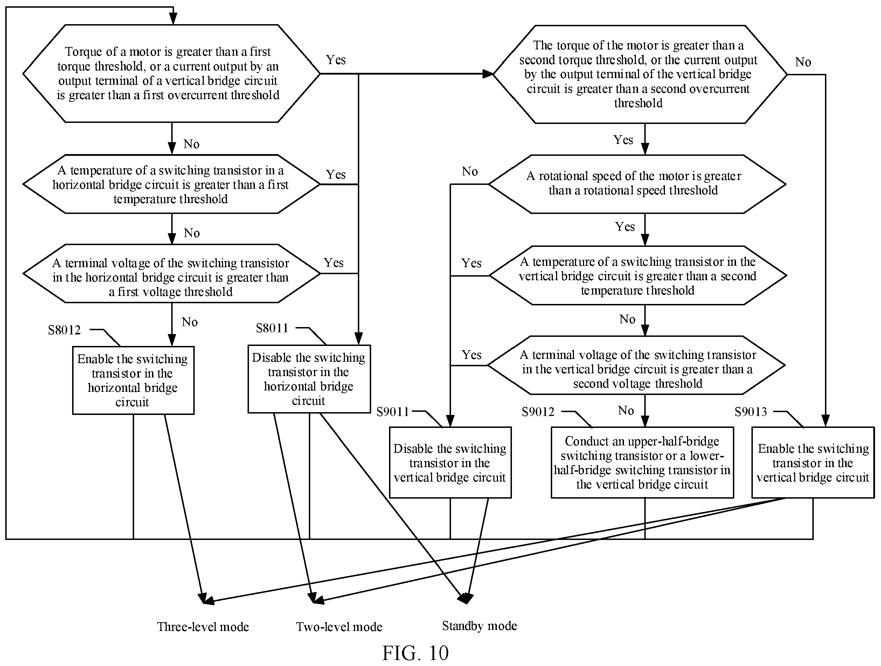

Specifically, as shown in FIG. 10, this step may include:
S8011. Disable the switching transistor in the horizontal bridge circuit if the torque of the motor is greater than a first torque threshold or the current output by the output terminal of the vertical bridge circuit is greater than a first overcurrent threshold, the temperature of the switching transistor in the horizontal bridge circuit is greater than a first temperature threshold, or the terminal voltage of the switching transistor in the horizontal bridge circuit is greater than a first voltage threshold.

The condition that the torque of the motor is greater than the first torque threshold and the condition that the current output by the output terminal of the vertical bridge circuit is greater than the first overcurrent threshold are equivalent to each other.

In this embodiment of this application, regardless of in the horizontal bridge circuit or the vertical bridge circuit, a case in which the temperature of the switching transistor is greater than a specific temperature threshold may also be referred to as a case in which there is overtemperature for the switching transistor, and a case in which the terminal voltage of the switching transistor is greater than a specific voltage threshold may also be referred to as a case in which there is overvoltage for the switching transistor. In both cases, it may be considered that the switching transistor is faulty.

S8012. Enable the switching transistor in the horizontal bridge circuit if the torque of the motor is not greater than a first torque threshold or the current output by the output terminal is not greater than a first overcurrent threshold, the temperature of the switching transistor in the horizontal bridge circuit is not greater than a first temperature threshold, and the terminal voltage of the switching transistor in the horizontal bridge circuit is not greater than a first voltage threshold.

In other words, the switching transistor in the horizontal bridge circuit is enabled if the torque of the motor is less than or equal to the first torque threshold or the current output by the output terminal of the vertical bridge circuit is less than or equal to the first overcurrent threshold, the temperature of the switching transistor in the horizontal bridge circuit is less than or equal to the first temperature threshold, and the terminal voltage of the switching transistor in the horizontal bridge circuit is less than or equal to the first voltage threshold.

The first overcurrent threshold may be less than or equal to the current capacity of the switching transistor in the horizontal bridge circuit. For example, the current capacity of the switching transistor in the horizontal bridge circuit is 1/6 of the current capacity of the switching transistor in the vertical bridge circuit. In this case, the first overcurrent threshold may be less than or equal to 1/6 of the current capacity of the switching transistor in the vertical bridge circuit.

The torque of the motor is positively correlated with the current output by the output terminal of the vertical bridge circuit. Therefore, a ratio of the first torque threshold to peak torque of the motor may be less than or equal to a ratio of the first overcurrent threshold to the current capacity of the switching transistor in the vertical bridge circuit. For example, the torque threshold may be less than or equal to 1/6 of the peak torque of the motor.

When the switching transistor in the vertical bridge circuit and the switching transistor in the horizontal bridge circuit are enabled, it is equivalent to that the MCU enters a three-level working mode. When the switching transistor in the vertical bridge circuit is enabled and the switching transistor in the horizontal bridge circuit is disabled, it is equivalent to that the MCU enters a two-level working mode. For how to enable the switching transistor in the vertical bridge circuit, the switching transistor in the vertical bridge circuit may be always enabled, or a control method shown in FIG. 9 and FIG. 10 is used to determine when to enable the switching transistor in the vertical bridge circuit. This is not limited in this application. Unless otherwise specified, it is considered by default that the switching transistor in the horizontal bridge circuit is enabled, so that when the MCU is switched between the three-level working mode and the two-level working mode, it is considered by default that the switching transistor in the vertical bridge circuit is enabled.

When the torque of the motor is less than the first torque threshold (low-torque region), the switching transistor in the horizontal bridge circuit is enabled, and the MCU is in the three-level working mode, to improve system efficiency. In addition, a current value of the switching transistor in the horizontal bridge circuit is less than the corresponding current capacity, and therefore there is no case in which the switching transistor in the horizontal bridge circuit is damaged. When the torque of the motor is greater than or equal to the first torque threshold (high-torque region), the current value of the switching transistor in the horizontal bridge circuit may exceed the corresponding current capacity. In this case, the switching transistor in the horizontal bridge circuit is disabled, and the MCU is in the two-level working mode, to avoid a case in which the switching transistor in the horizontal bridge circuit is damaged.

To prevent the MCU from being frequently switched between the two-level working mode and the three-level working mode, a threshold hysteresis may be introduced to the first overcurrent threshold or the first torque threshold. That is, in step S8012, the first overcurrent threshold is replaced with a difference between the first overcurrent threshold and an overcurrent threshold hysteresis, and the first torque threshold is replaced with a difference between the first torque threshold and a torque threshold hysteresis.

For example, when the MCU works in the three-level working mode, if the current output by the output terminal of the vertical bridge circuit is greater than the first overcurrent threshold or the torque of the motor is greater than the first torque threshold, the switching transistor in the horizontal bridge circuit is disabled, in other words, switching to the two-level working mode is performed. When the MCU works in the two-level working mode, if the current output by the output terminal of the vertical bridge circuit is less than the difference between the first overcurrent threshold and the overcurrent threshold hysteresis or the torque of the motor is less than or equal to the difference between the first torque threshold and the torque threshold hysteresis, the switching transistor in the horizontal bridge circuit is enabled, in other words, switching to the three-level working mode is performed.

It should be noted that after enabling or disabling the switching transistor in the horizontal bridge circuit, the control apparatus may further adjust a duty cycle of the PWM control signal, so that a voltage output by the output terminal of the vertical bridge circuit remains unchanged. A three-phase full-bridge two-level inverter circuit and the three-phase full-bridge three-level inverter circuit output different voltages. Therefore, to prevent voltage pulsation from impacting the motor, the duty cycle of the PWM control signal is adjusted, so that the voltage output by the output terminal of the vertical bridge circuit remains unchanged.

In addition, after enabling or disabling the switching transistor in the horizontal bridge circuit, the control apparatus may further adjust the duty cycle of the PWM control signal, so that the current output by the output terminal of the vertical bridge circuit is less than the first overcurrent threshold, to avoid a case in which the switching transistor in the horizontal bridge circuit is damaged due to overcurrent.

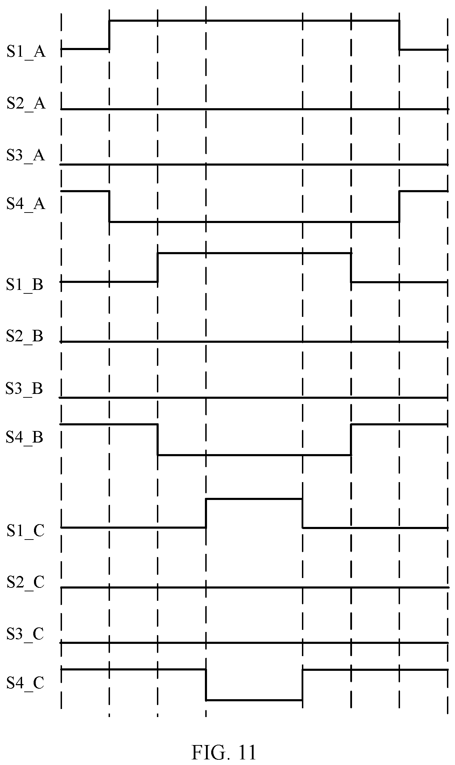

As shown in FIG. 11, in the two-level working mode, the switching transistor (a second switching transistor S2_A/S2_B/S2_C and a third switching transistor S3_A/S3_B/S3_C) in the horizontal bridge circuit is disabled, and the switching transistor (a first switching transistor S1_A/S1_B/S1_C and a fourth switching transistor S4_A/S4_B/S4_C) in the vertical bridge circuit is periodically conducted and cut off.

In the three-level working mode, if there is a P state when an output voltage of each phase is Vdc/2, there is an O state when the output voltage is 0, and there is an N state when the output voltage is -Vdc/2, there are a total of 27 switching states for the T-type three-phase full-bridge three-level inverter circuit.

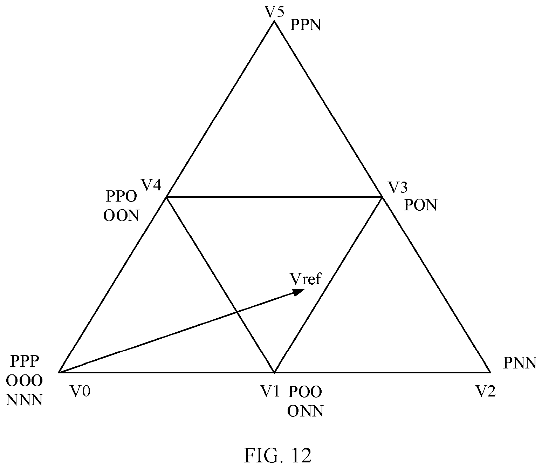

FIG. 12 shows a spatial location of each voltage vector in the three-phase full-bridge three-level inverter circuit. For example, when a reference voltage vector Vref is located in a sector shown in the figure, the reference voltage vector Vref includes effective voltage vectors PP0(00N), P00(0NN), PNN, P0N, and PPN and a zero vector (PPP/000/NNN). A reference voltage vector located in another sector is calculated in a similar method.

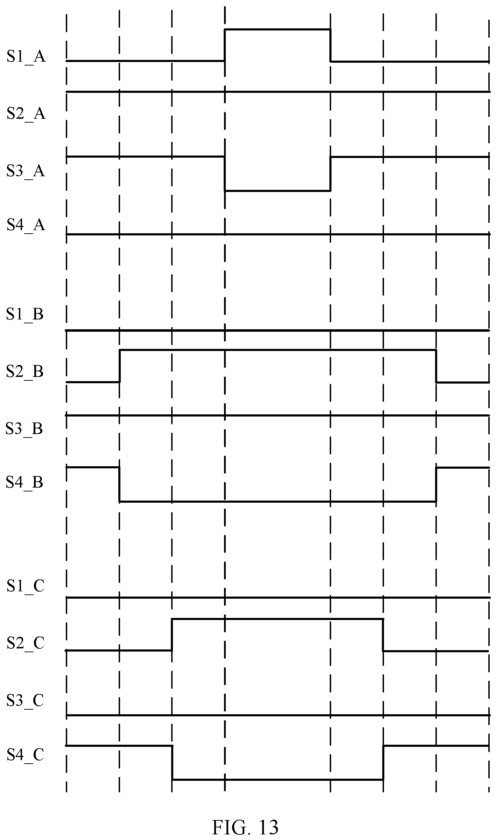

As shown in FIG. 13, in the three-level working mode, in each bridge arm in each of the horizontal bridge circuit and the vertical bridge circuit, one switching transistor is kept to be conducted or cut off, and another switching transistor is periodically conducted and cutoff.

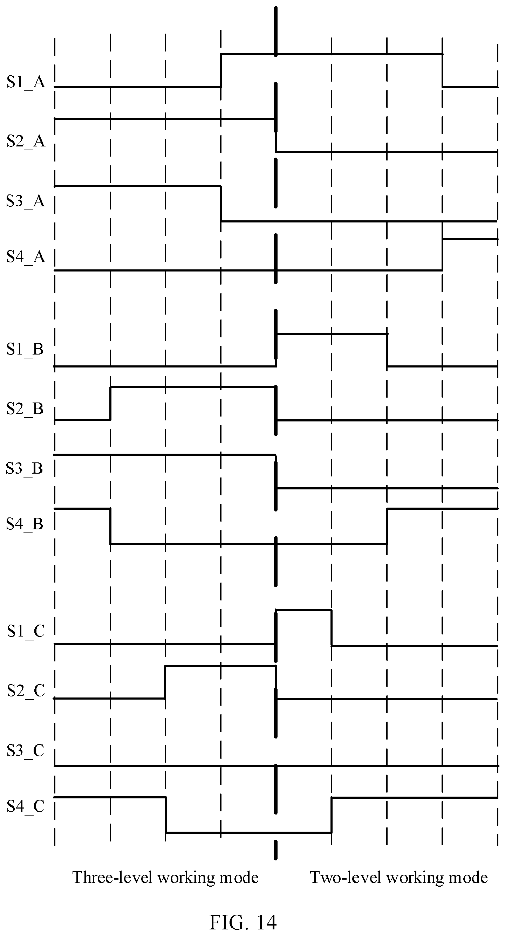

When the reference voltage vector is located in the sector shown in FIG. 12 and switching from the three-level working mode to the two-level working mode is performed, switching from a case that is shown in FIG. 12 and in which the reference voltage vector Vref includes the effective voltage vectors PP0(00N), P00(0NN), PNN, P0N, and PPN and the zero vector (PPP/000/NNN) to a case that is shown in FIG. 4 and in which the reference voltage vector Vref includes effective voltage vectors V4(100) and V6(110) and a zero vector V0(000)/V7(111) is performed. An action time of each of the effective voltage vectors V4(100) and V6(110) is adjusted (the duty cycle of the PWM control signal is adjusted), so that the voltage output by the output terminal of the vertical bridge circuit remains unchanged regardless of whether switching is performed. A working state of the switching transistor is shown in FIG. 14. When switching from the two-level working mode to the three-level working mode is performed, there is an opposite switching manner.

According to the motor control unit and the control method provided in embodiments of this application, on the basis of the T-type three-phase full-bridge three-level inverter circuit, the switching transistor in the horizontal bridge circuit is enabled or disabled based on the torque of the motor, the current output by the output terminal, the temperature of the switching transistor in the horizontal bridge circuit, and the terminal voltage of the switching transistor in the horizontal bridge circuit. The switching transistor in the horizontal bridge circuit is enabled in the low-torque region, so that the MCU works in the three-level working mode, to improve system efficiency of the inverter circuit. The switching transistor in the horizontal bridge circuit is disabled in the high-torque region, to avoid a case in which all switching transistors in the three-phase full-bridge inverter circuit continuously work. In addition, the current capacity of the switching transistor in the horizontal bridge circuit is less than the current capacity of the switching transistor in the vertical bridge circuit, in other words, a specification of the switching transistor in the horizontal bridge circuit can be reduced, to reduce costs of the inverter circuit.

As shown in FIG. 9, the control method may further include:
S901. Control the switching transistor in the vertical bridge circuit based on the torque of the motor, the current output by the output terminal, a rotational speed of the motor, a temperature of the switching transistor in the vertical bridge circuit, and a terminal voltage of the switching transistor in the vertical bridge circuit.

Specifically, as shown in FIG. 10, this step may include:
S9011. When the torque of the motor is greater than a second torque threshold or the current output by the output terminal is greater than a second overcurrent threshold, if the rotational speed of the motor is less than or equal to a rotational speed threshold, the temperature of the switching transistor in the vertical bridge circuit is greater than a second temperature threshold, or the terminal voltage of the switching transistor in the vertical bridge circuit is greater than a second voltage threshold, disable the switching transistor in the vertical bridge circuit, to protect the vertical bridge circuit.

The current capacity of the switching transistor in the vertical bridge circuit is greater than the current capacity of the switching transistor in the horizontal bridge circuit, and therefore the second overcurrent threshold is greater than the first overcurrent threshold, but is less than or equal to the current capacity of the switching transistor in the vertical bridge circuit. In addition, the torque of the motor is positively correlated with the current output by the output terminal of the vertical bridge circuit, and therefore the second torque threshold is greater than the first torque threshold, but is less than or equal to the peak torque of the motor.

S9012. If the rotational speed of the motor is greater than a rotational speed threshold, the temperature of the switching transistor in the vertical bridge circuit is not greater than a second temperature threshold, and the terminal voltage of the switching transistor in the vertical bridge circuit is not greater than a second voltage threshold, conduct an upper-half-bridge switching transistor or a lower-half-bridge switching transistor in the vertical bridge circuit, to short-circuit a winding of the motor.

In other words, when the torque of the motor is greater than a second torque threshold or the current output by the output terminal is greater than a second overcurrent threshold, if the rotational speed of the motor is greater than the rotational speed threshold, the temperature of the switching transistor in the vertical bridge circuit is less than or equal to the second temperature threshold, and the terminal voltage of the switching transistor in the vertical bridge circuit is less than or equal to the second voltage threshold, the upper-half-bridge switching transistor or the lower-half-bridge switching transistor in the vertical bridge circuit is conducted, to short-circuit the winding of the motor.

S9013. Enable the switching transistor in the vertical bridge circuit when the torque of the motor is less than or equal to a second torque threshold or the current output by the output terminal is less than or equal to a second overcurrent threshold.

The current capacity of the switching transistor in the vertical bridge circuit is greater than the current capacity of the switching transistor in the horizontal bridge circuit, in other words, a specification of the switching transistor in the vertical bridge circuit is greater than a specification of the switching transistor in the horizontal bridge circuit. Therefore, the switching transistor in the vertical bridge circuit is more resistant to a voltage and a high temperature than the switching transistor in the horizontal bridge circuit, and the second voltage threshold is greater than the first voltage threshold, and the second temperature threshold is greater than the first temperature threshold.

When the switching transistor in the vertical bridge circuit and the switching transistor in the horizontal bridge circuit are disabled, it is equivalent to that the MCU enters a shutdown mode.

An embodiment of this application further provides a computer-readable storage medium. The computer-readable storage medium stores a computer program. When the computer program is run on a computer or a processor, the control method in FIG. 8 to FIG. 10 is performed.

An embodiment of this application further provides a computer program product including instructions. When the instructions are run on a computer or a processor, the control method in FIG. 8 to FIG. 10 is performed.

An embodiment of this application provides a chip system. The chip system includes a processor, configured to perform the control method in FIG. 8 to FIG. 10.

In a possible design, the chip system further includes a memory. The memory is configured to store necessary program instructions and data. The chip system may include a chip and an integrated circuit, or may include a chip and another discrete device. This is not specifically limited in this embodiment of this application.

The computer-readable storage medium, the computer program product, or the chip system provided in this application is configured to perform the foregoing method. Therefore, for beneficial effects that can be achieved by the computer-readable storage medium, the computer program product, or the chip system, refer to the beneficial effects in the implementations provided above. Details are not described herein.

The processor in embodiments of this application may be a chip. For example, the processor may be a field-programmable gate array (FPGA), an application-specific integrated circuit (ASIC), a system on chip (SoC), or a central processor unit (CPU), a network processor (NP), a digital signal processor (DSP), a micro controller unit (MCU), or a programmable logic device (PLD) or another integrated chip.

The memory in embodiments of this application may be a volatile memory or a non-volatile memory, or may include a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), and is used as an external cache. By way of example and not limitation, RAMs in many forms may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory in the systems and methods described in this specification includes but is not limited to these memories and any memory of another appropriate type.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor control unit (11), comprising: a three-phase full-bridge three-level inverter circuit (111) and a control apparatus (112), wherein the three-phase full-bridge three-level inverter circuit (111) comprises a vertical bridge circuit and a horizontal bridge circuit; **characterised in that**
a current capacity of a switching transistor in the vertical bridge circuit is greater than or equal to a maximum current of a motor (13), and a current capacity of a switching transistor in the horizontal bridge circuit is less than the current capacity of the switching transistor in the vertical bridge circuit; and
the control apparatus (112) is configured to control the switching transistor in the horizontal bridge circuit based on torque of the motor (13), a current output by an output terminal of the vertical bridge circuit, a temperature of the switching transistor in the horizontal bridge circuit, and a terminal voltage of the switching transistor in the horizontal bridge circuit.

2. The motor control unit according to claim 1, wherein the control apparatus (112) is specifically configured to:
disable the switching transistor in the horizontal bridge circuit if the torque of the motor (13) is greater than a first torque threshold, the current output by the output terminal is greater than a first overcurrent threshold, the temperature of the switching transistor in the horizontal bridge circuit is greater than a first temperature threshold, or the terminal voltage of the switching transistor in the horizontal bridge circuit is greater than a first voltage threshold, or
enable the switching transistor in the horizontal bridge circuit if the torque of the motor (13) is not greater than a first torque threshold, the current output by the output terminal is not greater than a first overcurrent threshold, the temperature of the switching transistor in the horizontal bridge circuit is not greater than a first temperature threshold, or the terminal voltage of the switching transistor in the horizontal bridge circuit is not greater than a first voltage threshold.

3. The motor control unit according to any one of claims 1 to 2, wherein the control apparatus (112) is further configured to:
control the switching transistor in the vertical bridge circuit based on the torque of the motor (13), the current output by the output terminal, a rotational speed of the motor (13), a temperature of the switching transistor in the vertical bridge circuit, and a terminal voltage of the switching transistor in the vertical bridge circuit.

4. The motor control unit according to claim 3, wherein the control apparatus (112) is specifically configured to:
when the torque of the motor (13) is greater than a second torque threshold or the current output by the output terminal is greater than a second overcurrent threshold,
if the rotational speed of the motor (13) is less than or equal to a rotational speed threshold, the temperature of the switching transistor in the vertical bridge circuit is greater than a second temperature threshold, or the terminal voltage of the switching transistor in the vertical bridge circuit is greater than a second voltage threshold, disable the switching transistor in the vertical bridge circuit, or if the rotational speed of the motor (13) is greater than a rotational speed threshold, the temperature of the switching transistor in the vertical bridge circuit is not greater than a second temperature threshold, and the terminal voltage of the switching transistor in the vertical bridge circuit is not greater than a second voltage threshold, conduct an upper-half-bridge switching transistor or a lower-half-bridge switching transistor in the vertical bridge circuit; and
when the torque of the motor (13) is less than or equal to a second torque threshold or the current output by the output terminal is less than or equal to a second overcurrent threshold, enable the switching transistor in the vertical bridge circuit.

5. The motor control unit according to any one of claims 1 to 4, wherein the control apparatus (112) is further configured to:
after enabling or disabling the switching transistor in the horizontal bridge circuit, adjust a duty cycle of a pulse width modulation control signal, so that a voltage output by the output terminal remains unchanged.

6. A control method for a motor control unit, applied to the motor control unit (11) according to any one of claims 1 to 5, wherein the control method comprises:
controlling a switching transistor in a horizontal bridge circuit based on torque of a motor (13), a current output by an output terminal of a vertical bridge circuit in a three-phase full-bridge three-level inverter circuit (111), a temperature of the switching transistor in the horizontal bridge circuit in the three-phase full-bridge three-level inverter circuit (111), and a terminal voltage of the switching transistor in the horizontal bridge circuit.

7. The control method according to claim 6, wherein the controlling a switching transistor in a horizontal bridge circuit based on torque of a motor (13), a current output by an output terminal of a vertical bridge circuit in a three-phase full-bridge three-level inverter circuit (111), a temperature of the switching transistor in the horizontal bridge circuit in the three-phase full-bridge three-level inverter circuit (111), and a terminal voltage of the switching transistor in the horizontal bridge circuit comprises:
disabling the switching transistor in the horizontal bridge circuit if the torque of the motor is greater than a first torque threshold, the current output by the output terminal is greater than a first overcurrent threshold, the temperature of the switching transistor in the horizontal bridge circuit is greater than a first temperature threshold, or the terminal voltage of the switching transistor in the horizontal bridge circuit is greater than a first voltage threshold; or
enabling the switching transistor in the horizontal bridge circuit if the torque of the motor (13) is not greater than a first torque threshold or the current output by the output terminal is not greater than a first overcurrent threshold, the temperature of the switching transistor in the horizontal bridge circuit is not greater than a first temperature threshold, and the terminal voltage of the switching transistor in the horizontal bridge circuit is not greater than a first voltage threshold.

8. The control method according to any one of claims 6 to 7, further comprising:
controlling a switching transistor in the vertical bridge circuit based on the torque of the motor (13), the current output by the output terminal, a rotational speed of the motor (13), a temperature of the switching transistor in the vertical bridge circuit, and a terminal voltage of the switching transistor in the vertical bridge circuit.

9. The control method according to claim 8, wherein the controlling a switching transistor in the vertical bridge circuit based on the torque of the motor (13), the current output by the output terminal, a rotational speed of the motor (13), a temperature of the switching transistor in the vertical bridge circuit, and a terminal voltage of the switching transistor in the vertical bridge circuit comprises:
when the torque of the motor (13) is greater than a second torque threshold or the current output by the output terminal is greater than a second overcurrent threshold,
if the rotational speed of the motor (13) is less than or equal to a rotational speed threshold, the temperature of the switching transistor in the vertical bridge circuit is greater than a second temperature threshold, or the terminal voltage of the switching transistor in the vertical bridge circuit is greater than a second voltage threshold, disabling the switching transistor in the vertical bridge circuit, or if the rotational speed of the motor (13) is greater than a rotational speed threshold, the temperature of the switching transistor in the vertical bridge circuit is not greater than a second temperature threshold, and the terminal voltage of the switching transistor in the vertical bridge circuit is not greater than a second voltage threshold, conducting an upper-half-bridge switching transistor or a lower-half-bridge switching transistor in the vertical bridge circuit; and
when the torque of the motor (13) is less than or equal to a second torque threshold or the current output by the output terminal is less than or equal to a second overcurrent threshold, enabling the switching transistor in the vertical bridge circuit.

10. The control method according to any one of claims 6 to 9, further comprising:
after the switching transistor in the horizontal bridge circuit is enabled or disabled, adjusting a duty cycle of a pulse width modulation control signal, so that a voltage output by the output terminal remains unchanged.

11. A power assembly, comprising the motor control unit according to any one of claims 1 to 5, a direct current power supply (12), and a motor (13), wherein the motor control unit (11) is configured to: convert a direct current output by the direct current power supply (12) into an alternating current, supply power to the motor (13), and control a rotational speed of the motor (13).

## Patentansprüche

1. Motorsteuereinheit (11), die umfasst: eine dreiphasige Vollbrücken-Dreistufen-Wechselrichterschaltung (111) und eine Steuereinrichtung (112), wobei die dreiphasige Vollbrücken-Dreistufen-Wechselrichterschaltung (111) eine vertikale Brückenschaltung und eine horizontale Brückenschaltung umfasst;
**dadurch gekennzeichnet, dass** eine Stromkapazität eines Schalttransistors in der vertikalen Brückenschaltung größer als oder gleich einem Maximalstrom eines Motors (13) ist und eine Stromkapazität eines Schalttransistors in der horizontalen Brückenschaltung kleiner als die Stromkapazität des Schalttransistors in der vertikalen Brückenschaltung ist und
die Steuereinrichtung (112) konfiguriert ist, um den Schalttransistor in der horizontalen Brückenschaltung basierend auf dem Drehmoment des Motors (13), einem von einem Ausgangsanschluss der vertikalen Brückenschaltung ausgegebenen Strom, einer Temperatur des Schalttransistors in der horizontalen Brückenschaltung und einer Anschlussspannung des Schalttransistors in der horizontalen Brückenschaltung zu steuern.

2. Motorsteuereinheit nach Anspruch 1, wobei die Steuereinrichtung (112) speziell konfiguriert ist zum:
Deaktivieren des Schalttransistors in der horizontalen Brückenschaltung, falls das Drehmoment des Motors (13) größer als ein erster Drehmomentschwellenwert ist, der von dem Ausgangsanschluss ausgegebene Strom größer als ein erster Überstromschwellenwert ist, die Temperatur des Schalttransistors in der horizontalen Brückenschaltung größer als ein erster Temperaturschwellenwert ist oder die Anschlussspannung des Schalttransistors in der horizontalen Brückenschaltung größer als ein erster Spannungsschwellenwert ist; oder
Aktivieren des Schalttransistors in der horizontalen Brückenschaltung, falls das Drehmoment des Motors (13) nicht größer als ein erster Drehmomentschwellenwert ist, der von dem Ausgangsanschluss ausgegebene Strom nicht größer als ein erster Überstromschwellenwert ist, die Temperatur des Schalttransistors in der horizontalen Brückenschaltung nicht größer als ein erster Temperaturschwellenwert ist oder die Anschlussspannung des Schalttransistors in der horizontalen Brückenschaltung nicht größer als ein erster Spannungsschwellenwert ist.

3. Motorsteuereinheit nach einem der Ansprüche 1 bis 2, wobei die Steuereinrichtung (112) ferner konfiguriert ist zum:
Steuern des Schalttransistors in der vertikalen Brückenschaltung basierend auf dem Drehmoment des Motors (13), dem von dem Ausgangsanschluss ausgegebenen Strom, einer Drehzahl des Motors (13), einer Temperatur des Schalttransistors in der vertikalen Brückenschaltung und einer Anschlussspannung des Schalttransistors in der vertikalen Brückenschaltung.

4. Motorsteuereinheit nach Anspruch 3, wobei die Steuereinrichtung (112) speziell konfiguriert ist zum:
wenn das Drehmoment des Motors (13) größer als ein zweiter Drehmomentschwellenwert ist oder der von dem Ausgangsanschluss ausgegebene Strom größer als ein zweiter Überstromschwellenwert ist,
falls die Drehzahl des Motors (13) kleiner als oder gleich einem Drehzahlschwellenwert ist, die Temperatur des Schalttransistors in der vertikalen Brückenschaltung größer als ein zweiter Temperaturschwellenwert ist oder die Anschlussspannung des Schalttransistors in der vertikalen Brückenschaltung größer als ein zweiter Spannungsschwellenwert ist, Deaktivieren des Schalttransistors in der vertikalen Brückenschaltung; oder falls die Drehzahl des Motors (3) größer als ein Drehzahlschwellenwert ist, die Temperatur des Schalttransistors in der vertikalen Brückenschaltung nicht größer als ein zweiter Temperaturschwellenwert ist und die Anschlussspannung des Schalttransistors in der vertikalen Brückenschaltung nicht größer als ein zweiter Spannungsschwellenwert ist, Leiten eines Schalttransistors einer oberen Halbbrücke oder eines Schalttransistors einer unteren Halbbrücke in der vertikalen Brückenschaltung; und
wenn das Drehmoment des Motors (13) kleiner als oder gleich einem zweiten Drehmomentschwellenwert ist oder der von dem Ausgangsanschluss ausgegebene Strom kleiner als oder gleich einem zweiten Überstromschwellenwert ist, Aktivieren des Schalttransistors in der vertikalen Brückenschaltung.

5. Motorsteuereinheit nach einem der Ansprüche 1 bis 4, wobei die Steuereinrichtung (112) ferner konfiguriert ist zum:
nach dem Aktivieren oder Deaktivieren des Schalttransistors in der horizontalen Brückenschaltung, Anpassen eines Tastverhältnisses eines Pulsweitenmodulations-Steuersignals, sodass eine von dem Ausgangsanschluss ausgegebene Spannung unverändert bleibt.

6. Steuerverfahren für eine Motorsteuereinheit, das auf die Motorsteuereinheit (11) nach einem der Ansprüche 1 bis 5 angewendet wird, wobei das Steuerverfahren umfasst: Steuern eines Schalttransistors in einer horizontalen Brückenschaltung basierend auf dem Drehmoment eines Motors (13), einem von einem Ausgangsanschluss einer vertikalen Brückenschaltung in einer dreiphasigen Vollbrücken-Dreistufen-Wechselrichterschaltung (111) ausgegebenen Strom, einer Temperatur des Schalttransistors in der horizontalen Brückenschaltung in der dreiphasigen Vollbrücken-Dreistufen-Wechselrichterschaltung (111) und einer Anschlussspannung des Schalttransistors in der horizontalen Brückenschaltung.

7. Steuerverfahren nach Anspruch 6, wobei das Steuern eines Schalttransistors in einer horizontalen Brückenschaltung basierend auf dem Drehmoment eines Motors (13), einem von einem Ausgangsanschluss einer vertikalen Brückenschaltung in einer dreiphasigen Vollbrücken-Dreistufen-Wechselrichterschaltung (111) ausgegebenen Strom, einer Temperatur des Schalttransistors in der horizontalen Brückenschaltung in der dreiphasigen Vollbrücken-Dreistufen-Wechselrichterschaltung (111) und einer Anschlussspannung des Schalttransistors in der horizontalen Brückenschaltung umfasst:
Deaktivieren des Schalttransistors in der horizontalen Brückenschaltung, falls das Drehmoment des Motors größer als ein erster Drehmomentschwellenwert ist, der von dem Ausgangsanschluss ausgegebene Strom größer als ein erster Überstromschwellenwert ist, die Temperatur des Schalttransistors in der horizontalen Brückenschaltung größer als ein erster Temperaturschwellenwert ist oder die Anschlussspannung des Schalttransistors in der horizontalen Brückenschaltung größer als ein erster Spannungsschwellenwert ist; oder
Aktivieren des Schalttransistors in der horizontalen Brückenschaltung, falls das Drehmoment des Motors (13) nicht größer als ein erster Drehmomentschwellenwert ist oder der von dem Ausgangsanschluss ausgegebene Strom nicht größer als ein erster Überstromschwellenwert ist, die Temperatur des Schalttransistors in der horizontalen Brückenschaltung nicht größer als ein erster Temperaturschwellenwert ist und die Anschlussspannung des Schalttransistors in der horizontalen Brückenschaltung nicht größer als ein erster Spannungsschwellenwert ist.

8. Steuerverfahren nach einem der Ansprüche 6 bis 7, das ferner umfasst:
Steuern eines Schalttransistors in der vertikalen Brückenschaltung basierend auf dem Drehmoment des Motors (13), dem von dem Ausgangsanschluss ausgegebenen Strom, einer Drehzahl des Motors (13), einer Temperatur des Schalttransistors in der vertikalen Brückenschaltung und einer Anschlussspannung des Schalttransistors in der vertikalen Brückenschaltung.

9. Steuerverfahren nach Anspruch 8, wobei das Steuern eines Schalttransistors in der vertikalen Brückenschaltung basierend auf dem Drehmoment des Motors (13), dem von dem Ausgangsanschluss ausgegebenen Strom, einer Drehzahl des Motors (13), einer Temperatur des Schalttransistors in der vertikalen Brückenschaltung und einer Anschlussspannung des Schalttransistors in der vertikalen Brückenschaltung umfasst: wenn das Drehmoment des Motors (13) größer als ein zweiter Drehmomentschwellenwert ist oder der von dem Ausgangsanschluss ausgegebene Strom größer als ein zweiter Überstromschwellenwert ist,
falls die Drehzahl des Motors (13) kleiner als oder gleich einem Drehzahlschwellenwert ist, die Temperatur des Schalttransistors in der vertikalen Brückenschaltung größer als ein zweiter Temperaturschwellenwert ist oder die Anschlussspannung des Schalttransistors in der vertikalen Brückenschaltung größer als ein zweiter Spannungsschwellenwert ist, Deaktivieren des Schalttransistors in der vertikalen Brückenschaltung; oder falls die Drehzahl des Motors (13) größer als ein Drehzahlschwellenwert ist, die Temperatur des Schalttransistors in der vertikalen Brückenschaltung nicht größer als ein zweiter Temperaturschwellenwert ist und die Anschlussspannung des Schalttransistors in der vertikalen Brückenschaltung nicht größer als ein zweiter Spannungsschwellenwert ist, Leiten eines Schalttransistors einer oberen Halbbrücke oder eines Schalttransistors einer unteren Halbbrücke in der vertikalen Brückenschaltung; und
wenn das Drehmoment des Motors (13) kleiner als oder gleich einem zweiten Drehmomentschwellenwert ist oder der von dem Ausgangsanschluss ausgegebene Strom kleiner als oder gleich einem zweiten Überstromschwellenwert ist, Aktivieren des Schalttransistors in der vertikalen Brückenschaltung.

10. Steuerverfahren nach einem der Ansprüche 6 bis 9, das ferner umfasst:
nachdem der Schalttransistor in der horizontalen Brückenschaltung aktiviert oder deaktiviert wurde, Anpassen eines Tastverhältnisses eines Pulsweitenmodulations-Steuersignals, sodass eine von dem Ausgangsanschluss ausgegebene Spannung unverändert bleibt.

11. Leistungsbaugruppe, die die Motorsteuereinheit nach einem der Ansprüche 1 bis 5, eine Gleichstromversorgung (12) und einen Motor (13) umfasst, wobei die Motorsteuereinheit (11) konfiguriert ist zum: Umwandeln eines von der Gleichstromversorgung (12) ausgegebenen Gleichstroms in Wechselstrom, Versorgen des Motors (13) mit Strom und Steuern einer Drehzahl des Motors (13).

## Revendications

1. Unité de commande de moteur (11), comprenant : un circuit inverseur triphasé à pont complet à trois niveaux (111) et un appareil de commande (112), dans laquelle le circuit inverseur triphasé à pont complet à trois niveaux (111) comprend un circuit à pont vertical et un circuit à pont horizontal ;
**caractérisée en ce qu'**une capacité de courant d'un transistor de commutation dans le circuit à pont vertical est supérieure ou égale à un courant maximal d'un moteur (13), et une capacité de courant d'un transistor de commutation dans le circuit à pont horizontal est inférieure à la capacité de courant du transistor de commutation dans le circuit à pont vertical ; et
l'appareil de commande (112) est configuré pour commander le transistor de commutation dans le circuit à pont horizontal sur la base d'un couple du moteur (13), d'un courant émis par une borne de sortie du circuit à pont vertical, d'une température du transistor de commutation dans le circuit à pont horizontal, et d'une tension aux bornes du transistor de commutation dans le circuit à pont horizontal.

2. Unité de commande de moteur selon la revendication 1, dans laquelle l'appareil de commande (112) est spécifiquement configuré pour :
désactiver le transistor de commutation dans le circuit à pont horizontal si le couple du moteur (13) est supérieur à un premier seuil de couple, le courant émis par la borne de sortie est supérieur à un premier seuil de surintensité, la température du transistor de commutation dans le circuit à pont horizontal est supérieure à un premier seuil de température, ou la tension aux bornes du transistor de commutation dans le circuit à pont horizontal est supérieure à un premier seuil de tension ; ou
activer le transistor de commutation dans le circuit à pont horizontal si le couple du moteur (13) n'est pas supérieur à un premier seuil de couple, le courant émis par la borne de sortie n'est pas supérieur à un premier seuil de surintensité, la température du transistor de commutation dans le circuit à pont horizontal n'est pas supérieure à un premier seuil de température, ou la tension aux bornes du transistor de commutation dans le circuit à pont horizontal n'est pas supérieure à un premier seuil de tension.

3. Unité de commande de moteur selon l'une quelconque des revendications 1 à 2, dans laquelle l'appareil de commande (112) est en outre configuré pour :
commander le transistor de commutation dans le circuit à pont vertical sur la base du couple du moteur (13), du courant émis par la borne de sortie, d'une vitesse de rotation du moteur (13), d'une température du transistor de commutation dans le circuit à pont vertical, et d'une tension aux bornes du transistor de commutation dans le circuit à pont vertical.

4. Unité de commande de moteur selon la revendication 3, dans lequel l'appareil de commande (112) est spécifiquement configuré pour :
lorsque le couple du moteur (13) est supérieur à un second seuil de couple ou que le courant émis par la borne de sortie est supérieur à un second seuil de surintensité, si la vitesse de rotation du moteur (13) est inférieure ou égale à un seuil de vitesse de rotation, la température du transistor de commutation dans le circuit à pont vertical est supérieure à un second seuil de température, ou si la tension aux bornes du transistor de commutation dans le circuit à pont vertical est supérieure à un second seuil de tension, désactiver le transistor de commutation dans le circuit à pont vertical ; ou si la vitesse de rotation du moteur (3) est supérieure à un seuil de vitesse de rotation, la température du transistor de commutation dans le circuit à pont vertical n'est pas supérieure à un second seuil de température, et la tension aux bornes du transistor de commutation dans le circuit à pont vertical n'est pas supérieure à un second seuil de tension, mettre en conduction un transistor de commutation à demi-pont supérieur ou un transistor de commutation à demi-pont inférieur dans le circuit à pont vertical ; et
lorsque le couple du moteur (13) est inférieur ou égal à un second seuil de couple ou que le courant émis par la borne de sortie est inférieur ou égal à un second seuil de surintensité, activer le transistor de commutation dans le circuit à pont vertical.

5. Unité de commande de moteur selon l'une quelconque des revendications 1 à 4, dans laquelle l'appareil de commande (112) est en outre configuré pour :
après avoir activé ou désactivé le transistor de commutation dans le circuit à pont horizontal, ajuster un cycle de service d'un signal de commande de modulation de largeur d'impulsion, de sorte qu'une tension émise par la borne de sortie reste inchangée.

6. Procédé de commande pour une unité de commande de moteur, appliqué à l'unité de commande de moteur (11) selon l'une quelconque des revendications 1 à 5, dans lequel le procédé de commande comprend :
la commande d'un transistor de commutation dans un circuit à pont horizontal sur la base d'un couple d'un moteur (13), d'un courant émis par une borne de sortie d'un circuit à pont vertical dans un circuit inverseur triphasé à pont complet à trois niveaux (111), d'une température du transistor de commutation dans le circuit à pont horizontal dans le circuit inverseur triphasé à pont complet à trois niveaux (111), et d'une tension aux bornes du transistor de commutation dans le circuit à pont horizontal.

7. Procédé de commande selon la revendication 6, dans lequel la commande d'un transistor de commutation dans un circuit à pont horizontal sur la base d'un couple d'un moteur (13), d'un courant émis par une borne de sortie d'un circuit à pont vertical dans un circuit inverseur triphasé à pont complet à trois niveaux (111), d'une température du transistor de commutation dans le circuit à pont horizontal dans le circuit inverseur triphasé à pont complet à trois niveaux (111), et d'une tension aux bornes du transistor de commutation dans le circuit à pont horizontal, comprend :
la désactivation du transistor de commutation dans le circuit à pont horizontal si le couple du moteur est supérieur à un premier seuil de couple, le courant émis par la borne de sortie est supérieur à un premier seuil de surintensité, la température du transistor de commutation dans le circuit à pont horizontal est supérieure à un premier seuil de température, ou la tension aux bornes du transistor de commutation dans le circuit à pont horizontal est supérieure à un premier seuil de tension ; ou
l'activation du transistor de commutation dans le circuit à pont horizontal si le couple du moteur (13) n'est pas supérieur à un premier seuil de couple, le courant émis par la borne de sortie n'est pas supérieur à un premier seuil de surintensité, la température du transistor de commutation dans le circuit à pont horizontal n'est pas supérieure à un premier seuil de température, et la tension aux bornes du transistor de commutation dans le circuit à pont horizontal n'est pas supérieure à un premier seuil de tension.

8. Procédé de commande selon l'une quelconque des revendications 6 à 7, comprenant en outre :
la commande du transistor de commutation dans le circuit à pont vertical sur la base du couple du moteur (13), du courant émis par la borne de sortie, d'une vitesse de rotation du moteur (13), d'une température du transistor de commutation dans le circuit à pont vertical, et d'une tension aux bornes du transistor de commutation dans le circuit à pont vertical.

9. Procédé de commande selon la revendication 8, dans lequel la commande d'un transistor de commutation dans le circuit à pont vertical sur la base du couple du moteur (13), du courant émis par la borne de sortie, d'une vitesse de rotation du moteur (13), d'une température du transistor de commutation dans le circuit à pont vertical et d'une tension terminale du transistor de commutation dans le circuit à pont vertical comprend :
lorsque le couple du moteur (13) est supérieur à un second seuil de couple ou que le courant émis par la borne de sortie est supérieur à un second seuil de surintensité, si la vitesse de rotation du moteur (13) est inférieure ou égale à un seuil de vitesse de rotation, la température du transistor de commutation dans le circuit à pont vertical est supérieure à un second seuil de température, ou la tension aux bornes du transistor de commutation dans le circuit à pont vertical est supérieure à un second seuil de tension, la désactivation du transistor de commutation dans le circuit à pont vertical ; ou si la vitesse de rotation du moteur (13) est supérieure à un seuil de vitesse de rotation, la température du transistor de commutation dans le circuit à pont vertical n'est pas supérieure à un second seuil de température, et la tension aux bornes du transistor de commutation dans le circuit à pont vertical n'est pas supérieure à un second seuil de tension, la mise en conduction d'un transistor de commutation à demi-pont supérieur ou d'un transistor de commutation à demi-pont inférieur dans le circuit à pont vertical ; et
lorsque le couple du moteur (13) est inférieur ou égal à un second seuil de couple ou que le courant émis par la borne de sortie est inférieur ou égal à un second seuil de surintensité, l'activation du transistor de commutation dans le circuit à pont vertical.

10. Procédé de commande selon l'une quelconque des revendications 6 à 9, comprenant en outre :
après l'activation ou la désactivation du transistor de commutation dans le circuit à pont horizontal, l'ajustement d'un cycle de service d'un signal de commande de modulation de largeur d'impulsion, de sorte qu'une tension émise par la borne de sortie reste inchangée.

11. Ensemble de puissance, comprenant l'unité de commande de moteur selon l'une quelconque des revendications 1 à 5, une alimentation en courant continu (12), et un moteur (13), dans lequel l'unité de commande de moteur (11) est configurée pour : convertir un courant continu émis par l'alimentation en courant continu (12) en un courant alternatif, alimenter le moteur (13), et commander une vitesse de rotation du moteur (13).
